(19) Europäisches Patentamt
European Patent Office
Office européen des brevets

(11) Veröffentlichungsnummer: **0 054 607**
**B1**

(12) # EUROPÄISCHE PATENTSCHRIFT

(45) Veröffentlichungstag der Patentschrift: **04.09.85**

(51) Int. Cl.⁴: **G 21 F 9/06**, C 02 F 1/66

(21) Anmeldenummer: **81104150.8**

(22) Anmeldetag: **30.05.81**

(54) **Verfahren zur Entfernung von Ammoniumnitrat aus wässrigen Lösungen.**

(30) Priorität: **19.12.80 DE 3048002**

(43) Veröffentlichungstag der Anmeldung: **30.06.82 Patentblatt 82/26**

(45) Bekanntmachung des Hinweises auf die Patenterteilung: **04.09.85 Patentblatt 85/36**

(84) Benannte Vertragsstaaten: **BE FR GB NL**

(56) Entgegenhaltungen: **GB - A - 805 361**

(73) Patentinhaber: **Kernforschungszentrum Karlsruhe GmbH, Weberstrasse 5, D-7500 Karlsruhe 1 (DE)**

(72) Erfinder: **Hellgeist, Michael, Dipl.-Chem., Friedenstrasse 36, D-7515 Linkenheim-Ho. 1 (DE)**

**EP 0 054 607 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur Entfernung von Ammoniumnitrat $NH_4NO_3$ (kurz AN) aus wässrigen Lösungen.

Ammoniumnitrat, $NH_4NO_3$ (im folgenden kurz AN genannt), fällt beispielsweise in Wiederaufbereitungsverfahren für bestrahlte Kernbrenn- und/oder Brutstoffelemente, wie z.B. im PUREX-Prozess, als Nebenprodukt an und stört bei der technischen Weiterverarbeitung der Prozesslösungen. Bei der Herstellung von $UO_2$ nach dem Ammonium-Uranyl-Carbonat-Fällungsverfahren (AUC) bzw. bei der gemeinsamen Fällung von Uran und Plutonium nach dem Ammonium-Uranyl-Plutonyl-Carbonat-Verfahren (AUPuC) fällt das AN als Abfallprodukt an. In beiden Fällen muss das AN beseitigt werden. Für den PUREX-Prozess gibt es bislang keine Lösung für das Problem der Beseitigung der Störungen. Dagegen wurden für die Beseitigung des AN im AUC- bzw. AUPuC-Verfahren einige Verfahren vorgeschlagen, von denen jedoch keines eine befriedigende Lösung darstellt.

P. Morschl und E. Zimmer fügten der das AN enthaltenden Lösung zur Bildung von Ammoniak ein basisches Metalloxid oder Metallhydroxid unter Erhitzen der Lösung auf etwa 100 °C zu, wobei das gebildete Ammoniak durch Abdampfen von dem ebenfalls gebildeten Metallnitrat abgetrennt wird und im Anschluss daran die so gebildete Nitratlösung eingetrocknet und das Metallnitrat thermisch zu Metalloxid und Stickoxiden zersetzt wird, worauf die Stickoxide zu Salpetersäure weiterverarbeitet werden (DE-A-26 17 968). In einem Vorschlag von F. Herrmann und Th. Sondermann (DE-B-28 38 007) wird eine elektrophoretische Abtrennung von $NH_4^+$-Ionen von $NO_3^-$-Ionen durchgeführt und $NH_3$ durch Temperaturerhöhung ausgetrieben. Die $NO_3^-$-Ionen werden als $HNO_3$ zur Rezyklierung abgezogen. Nach einem weiteren Verfahren von Th. Sondermann (DE-A-29 01 067) zur Aufarbeitung AN-haltiger radioaktiver Filtrate, wie sie z.B. beim AUC- oder AUPuC-Prozess anfallen, wird die Lösung unter Mitwirkung der Stromwärme eines Elektrolysestromes auf Siedetemperatur gebracht und elektrolytisch denitriert. Hierbei entsteht freies $NH_3$ und $CO_2$. Ausserdem wurden noch die thermische Sprühzersetzung ANenthaltender Lösungen und die Zersetzung von AN mit konzentrierter Salpetersäure in Anwesenheit von Chloriden vorgeschlagen.

Allen diesen Verfahren ist gemeinsam, dass sie bisher im technischen Massstab noch nicht eingesetzt bzw. unter kerntechnischen Bedingungen noch nicht erprobt wurden. Die thermischen Zersetzungsverfahren weisen den grossen Nachteil auf, dass Temperaturen über 100 °C erforderlich sind, die benötigte Vorrichtung aufwendig ist im Hinblick auf Material und Raumbedarf und dass sich nitrose Gase $NO_x$ bilden.

Eine Zersetzung mit konzentrierter Salpetersäure und Chloriden bringt grosse Korrosionsprobleme durch die Anwesenheit von Chloriden mit sich. Die elektrolytischen Verfahren sind ebenfalls apparativ sehr aufwendig, es wird mit einem hohen elektrischen Energiebedarf gerechnet und es treten Anoden-Korrosionsprobleme auf.

Der Erfindung liegt daher die Aufgabe zugrunde, ein Verfahren zu schaffen, das die Nachteile der zum Stand der Technik gehörigen Verfahren vermeidet, eine einfache und sichere Durchführung, wie sie insbesondere in kerntechnischen Anlagen gefordert wird, in einfachen und robusten Apparaturen erlaubt und keine unerwünschten Reaktionsprodukte, wie z.B. $NH_3$ oder $NO_x$ als abzuleitende Abgase erzeugt.

Die Aufgabe wird in überraschend einfacher Weise erfindungsgemäss dadurch gelöst, dass der das AN enthaltenden, wässrigen Lösung mindestens eine Stickstoff-Sauerstoff-Verbindung in der Form von NO, $NO_2$, $N_2O_4$ oder eines Gemisches aus diesen in gasförmigem Zustand oder im Falle von $N_2O_4$ auch in flüssigem Zustand bei einer Temperatur oberhalb Raumtemperatur, jedoch unterhalb des Siedepunktes der AN enthaltenden Lösung bei Normaldruck zugeführt wird.

Die Stickstoff-Sauerstoff-Verbindung wird erfindungsgemäss in einer Menge der wässrigen, AN enthaltenden Lösung zugeführt, die einem Mol-Verhältnis N–O-Verbindung zu AN im Verhältnis-Bereich 1 Mol N–O-Verbindung zu 1 Mol AN bis 4 Mol N–O-Verbindung zu 1 Mol AN entspricht. Vorzugsweise wird die Temperatur der das AN enthaltende Lösung während der Reaktion mit der N–O-Verbindung im Bereich zwischen 50 °C und 100 °C gehalten.

Bei dem erfindungsgemässen Verfahren wird durch das Einleiten von beispielsweise gasförmigem NO oder $NO_2$ oder flüssigem $N_2O_4$ in die AN-haltige Lösung intermediär ein gemeinsames Auftreten von Ammoniumionen und $HNO_2$ in der Lösung erzielt, wonach eine Zersetzung nach der Gleichung

$$NH_4NO_2 = N_2 + 2\,H_2O$$

erfolgt. Das erfindungsgemässe Verfahren kann auch in Lösungen, die 1 molar an Salpetersäure sind, d.h. in einem pH-Bereich von 0 bis 7, ohne Schwierigkeiten durchgeführt werden.

Die Vorteile des erfindungsgemässen Verfahrens sind darin zu sehen, dass die Zersetzung des AN bei Temperaturen unterhalb des Siedepunktes der Lösung, bevorzugterweise sogar unter 100 °C, durchgeführt wird und als Zersetzungsprodukte praktisch nur Stickstoff und etwas Lachgas, welches bei einer Nebenreaktion entsteht, und Wasser gebildet werden.

Im folgenden wird die Erfindung anhand einiger Durchführungsbeispiele erläutert, die jedoch die Erfindung nicht einschränken.

Beispiel 1:

In ein einfach ausgebildetes, senkrecht stehendes, mit einem Thermostaten-Mantel umgebenes Reaktionsrohr, das mit Raschigringen gefüllt war, wurden 200 ml einer AN-haltigen Lösung eingebracht und danach von unten her die Stickstoff-Sauerstoff-Verbindung eingeleitet. Die Verfahrensweise im Hinblick auf Reaktionszeit, auf Dosierungsrate der Stickstoff-Sauerstoff-Verbindung, im Hinblick auf das Reaktionsgefäss oder des Reaktortyps und auf die angewendete Temperatur wurde nicht optimiert.

a) die vorgelegte Lösung (Elektrolyt) war 1 molar an Salpetersäure und 0,8 molar an $NH_4NO_3$. Innerhalb von 5 Stunden wurden 0,17 Mol gasförmiges $NO_2$ in den Elektrolyten eingeleitet. Der zeitliche Verlauf der $NH_4^+$-Konzentration zeigte während der Versuchsdauer eine praktisch kontinuierliche Abnahme, wie aus der folgenden Tabelle zu ersehen ist.

| T (°C) | t (h) 0 | 1 | 2 | 3 | 4 | 5 | |
|---|---|---|---|---|---|---|---|
| 90 | 0,8 | 0,78 | 0,72 | 0,65 | 0,58 | 0,55 | Mol/l $NH_4^+$ |

Das Mol-Verhältnis $NO_2$ zu $NH_4^+$ betrug nach Versuchsende 1,1:1. Es wurde in diesem Falle ein Umsatz von 27% festgestellt (keine Optimierung des Verfahrens).

b) Es wurden 200 ml einer 0,83 molaren $NH_4NO_3$-Lösung vorgelegt. Die Zudosierung von 0,17 Mol $NO_2$ erfolgte in 5 Stunden, die Temperatur der Lösung wurde auf 90 °C gehalten. Die Abnahme der AN-Konzentration in Abhängigkeit von der Zeit ist in der nachfolgenden Tabelle aufgeführt.

| T (°C) | t (h) 0 | 1 | 2 | 3 | 4 | 5 | |
|---|---|---|---|---|---|---|---|
| 90 | 0,83 | 0,75 | 0,66 | 0,60 | 0,54 | 0,53 | Mol/l $NH_4^+$ |

Das Mol-Verhältnis $NO_2$ zu $NH_4^+$ betrug auch hier nach Versuchsende 1,1:1. Es wurde ein Umsatz von AN von 36% notiert.

c) Vorgelegter Elektrolyt: 200 ml einer 1,8 molaren $NH_4NO_3$-Lösung. Zudosierung von 0,82 Mol $NO_2$ in 6 Stunden, Temperatur der Lösung 90 °C. Die Konzentration von AN sank von 1,8 Mol pro Liter auf 0,57 Mol pro Liter, entsprechend einem Umsatz von 63%. Der zeitliche Verlauf der $NH_4^+$-Konzentration ist der folgenden Tabelle zu entnehmen.

| T (°C) | t (h) 0 | 1 | 2 | 3 | 4 | 5 | 6 | |
|---|---|---|---|---|---|---|---|---|
| 90 | 1,82 | 1,78 | 1,64 | 1,45 | 1,33 | 0,92 | 0,57 | Mol/l $NH_4^+$ |

Das Mol-Verhältnis $NO_2:NH_4^+$ betrug nach Versuchsende 2,3:1. Als Reaktionsprodukt wurde im Abgas Stickstoff festgestellt. Die $N_2$-Bildungsrate entsprach dem AN-Umsatz.

Beispiel 2:

Es wurden 200 ml des gleichen Elektrolyten, wie in Beispiel 1 beschrieben, vorgelegt. Innerhalb von 6 Stunden wurde 0,4 bis 0,5 Mol NO eingeleitet. Während der Reaktionszeit erfolgte eine Abnahme der AN-Konzentration von 0,8 Mol pro Liter auf 0,36 Mol pro Liter bei 70 °C bzw. auf 0,095 Mol pro Liter bei 90 °C, entsprechend einem Umsatz von 52% (bei 70 °C) bzw. 87% (bei 90 °C). Als Reaktionsprodukte wurden bei 70 °C im Abgas $N_2$ und $N_2O$ festgestellt. Der zeitliche Verlauf der $NH_4^+$-Konzentration ist aus der nachfolgenden Tabelle zu ersehen.

| T (°C) | t (h) 0 | 1 | 2 | 3 | 4 | 5 | 6 | |
|---|---|---|---|---|---|---|---|---|
| 70 | 0,80 | 0,72 | 0,66 | 0,59 | 0,49 | 0,40 | 0,36 | Mol/l $NH_4^+$ |
| 90 | 0,80 | 0,64 | 0,51 | 0,35 | 0,24 | 0,12 | 0,095 | Mol/l $NH_4^+$ |

Das Mol-Verhältnis NO zu $NH_4^+$ war nach Versuchsende 2,5 bis 3,1:1.

**Patentansprüche**

1. Verfahren zur Entfernung von Ammoniumnitrat $NH_4NO_3$ (kurz AN) aus wässrigen Lösungen, dadurch gekennzeichnet, dass der das AN enthaltenden, wässrigen Lösung mindestens eine Stickstoff-Sauerstoff-Verbindung in der Form von NO, $NO_2$, $N_2O_4$ oder eines Gemisches aus diesen in gasförmigem Zustand oder im Falle von $N_2O_4$ auch in flüssigem Zustand bei einer Temperatur oberhalb Raumtemperatur, jedoch unterhalb des Siedepunktes der AN enthaltenden Lösung bei Normaldruck zugeführt wird.

2. Verfahren nach Anspruch 1, dadurch gekennzeichnet, dass die Stickstoff-Sauerstoff-Verbindung in einer Menge der wässrigen, AN enthaltenden Lösung zugeführt wird, die einem Mol-Verhältnis N–O-Verbindung zu AN im Verhältnisbereich 1 Mol N–O-Verbindung zu 1 Mol AN bis 4 Mol N–O-Verbindung zu 1 Mol AN entspricht.

3. Verfahren nach Anspruch, dadurch gekennzeichnet, dass die Temperatur der das AN enthaltenden Lösung während der Reaktion mit der N–O-Verbindung im Bereich zwischen 50 °C und 100 °C gehalten wird.

**Claims**

1. Process for removing ammonium nitrate $NH_4NO_3$ (abbreviated AN) from aqueous solutions comprising adding at least one nitrogen-oxygen compound in the form of NO, $NO_2$, $NO_2O_4$ or a mixture of these either as a gas or, in case of $N_2O_4$ also as a liquid, to the aqueous solution containing the AN at a temperature above room temperature but below the boiling point of the solution containing the AN and at normal pressure.

2. Method as defined in Claim 1, wherein the nitrogen-oxygen compound is introduced into the aqueous AN containing solution in a quantity which corresponds to a mole ratio of N–O-compound to AN in a range between 1 mole NO compound to 1 mole AN to 4 mole NO compound to 1 mole AN.

3. Process as defined in Claim 1, wherein during the reaction with the N–O-compound the temperature of the solution containing the AN is maintained in a range between 50 °C and 100 °C.

**Revendications**

1. Procédé pour l'élimination de nitrate d'ammonium $NH_4NO_3$ (en abrégé AN) de solutions aqueuses, procédé caractérisé en ce que dans la solution aqueuse contenant l'AN, il est introduit au moins un composé azoteoxygène sous la forme de NO, $NO_2$, $N_2O_4$ ou un mélange de ces composés à l'état gazeux ou, dans le cas de $N_2O_4$, à l'état liquide, à une température supérieure à la température ambiante, mais inférieure au point d'ébullition de la solution contenant l'AN, à la pression ordinaire.

2. Procédé selon la revendication 1, caractérisé en ce que le composé azote-oxygène est introduit dans la solution aqueuse contenant l'AN dans une proportion exprimant un rapport molaire composé N–O à AN, de l'ordre de 1 mole de composé N–O pour 1 mole d'AN et pouvant aller jusque 4 moles de composé N–O pour 1 mole d'AN.

3. Procédé selon la revendication 1, caractérisé en ce que la température de la solution contenant l'AN est maintenue, pendant la réaction avec le composé N–O, dans une zone comprise entre 50 °C et 100 °C.